# EUROPEAN PATENT APPLICATION

(11) **EP 3 495 252 A1**
(43) Date of publication of application: **12.06.2019**
(21) Application number: 19151119.5
(22) Date of filing: 14.10.2014
(51) Int. Cl.: B62J 6/02, B62J 17/02

(54) **SADDLE-RIDE TYPE VEHICLE**

(30) Priority: 20.11.2013 JP 2013239869; 01.07.2014 JP 2014135932
(62) Divisional of application: 14188796.8
(71) Applicant: YAMAHA HATSUDOKI KABUSHIKI KAISHA, Iwata-shi, Shizuoka 438-8501 (JP)
(72) Inventor: KAWASAKI, Yasuhiro, Shizuoka, 438-8501 (JP); OKABE, Toshihiko, Shizuoka, 438-8501 (JP)
(74) Representative: Grünecker Patent- und Rechtsanwälte PartG mbB

(57) **Abstract**

A saddle-ride type vehicle comprising a front cover member (15) including a first front cover (20) and a second front cover formed separately from the first front cover (20), wherein the first front cover (20) is at least partially located over a right light (19) and a left light (18), the second front cover is at least partially located under the right and left lights (19, 18), in a vehicle up-and-down direction, a dimension (H3) of the first front cover (20) is greater than a dimension (H4) of the second front cover, the second front cover includes an intermediate portion (227) in the middle of the vehicle in a vehicle width direction and the intermediate portion (227) extends more upward than inner lateral ends of lower edges of the right and left lights (19, 18).

## Description

The present invention relates to a saddle-ride type vehicle, and particularly to a so-called sport saddle-ride type vehicle.

A so-called sport saddle-ride type vehicle includes a front cover member and a large side cover member. The front cover member is a member in which a light is disposed. The side cover member extends from the front cover to laterally outside of an engine. Air resistance during travelling can be reduced by the aforementioned front cover member and side cover member. Further, it is desirable to compactly produce the front cover member in order to reduce air resistance during travelling as much as possible. To achieve this, for instance, the dimension of the front cover member from its lower end to its upper end is designed to be less than the dimension from the lower end of a front wheel to the lower end of the front cover member.

Further, the sport saddle-ride type vehicle has a structure that the front cover member is disposed forward of a handle member. Thus, a larger amount of wind can be led to the engine and so forth located rearward of the front wheel by disposing the compact front cover member in a relatively high position.

As described above, the front cover member, included in the sport saddle-ride type vehicle, preferably has a compact size. When thus having a compact size, the front cover member generally has an integrated structure as with the one included in a motorcycle described in, for instance, Japan Laid-open Patent Application Publication No. JP-A-2009-262914.

However, it has been noticed that even such a compact front cover member included in a sport saddle-ride type vehicle is advantageous when having a split structure.

First, from the perspective of enhancement in maintenance and so forth, it is preferable for the front cover member to be easily detachable from a vehicle body. This is because a large space can be reliably produced for making components of the vehicle body accessible by detaching the front cover member from the vehicle. However, the front cover member cannot be easily detached from the vehicle body when being integrally formed as with the one included in the well-known saddle-ride type vehicle.

In view of the above, it has been conceived of a front cover member structure. In the conceived structure, the front cover member is split up and down into a first front cover and a second front cover. The first front cover is positioned over the second front cover, and is detachable from the vehicle body. The front cover member structure herein conceived is more advantageous than the well-known one designed to be entirely detached from the vehicle body in that only the first front cover is easily detachable from the vehicle body.

There was an idea of enlarging the first front cover so as to reliably produce a large space after detachment of the first front cover even when the front cover member has a compact size.

However, the front cover member for the sport saddle-ride type vehicle generally has a compact size. Thus, when the first front cover is enlarged, the second front cover is accordingly reduced. In this case, remarkable degradation in stiffness is inevitable for the second front cover. Moreover, the side cover member is designed to be attached to the second front cover. The side cover member has a relatively large size and extends to laterally outside of the engine. Therefore, degradation in stiffness is not preferable for the second front cover in consideration of vibrations of the side cover member and so forth. However, when the second front cover is simply enlarged for reliably obtaining stiffness required for the second front cover, the first front cover is accordingly reduced. Thus, the space produced after detachment of the first front cover is inevitably reduced. Furthermore, a drawback is produced that the front cover member is entirely enlarged in attempting to achieve both objectives of reliably producing a large space after detachment of the first front cover and reliably obtaining stiffness required for the second front cover.

It is an object of the present invention to provide a saddle-ride type vehicle with high advantage obtained by splitting a front cover member and simultaneously inhibit degradation in stiffness of the front cover member in a so-called sport saddle-ride type vehicle. According to the present invention said object is solved by a saddle-ride type vehicle having the features of independent claim 1. Preferred embodiments are laid down in the dependent claims.

Accordingly, it is provided a saddle-ride type vehicle that includes a head pipe, a handle member, a front fork device, a front wheel, an engine, a front cover member, a pair of right and left lights and a side cover member. The head pipe is disposed in a middle of the vehicle in a vehicle width direction. The front fork device includes a steering shaft. The steering shaft is inserted into the head pipe. The handle member is connected to the steering shaft. The front fork device extends more downward than the head pipe. The front wheel is supported by the front fork device. The engine is disposed rearward of the front wheel. The front cover member is disposed forward of the head pipe and the handle member. The pair of right and left lights is disposed in the front cover member. The side cover member is attached to the front cover member, backwardly extends from the front cover member and is disposed laterally outward of at least a portion of the engine.

A dimension from a lower end of the front cover member to an upper end of the front cover member is less than a dimension from a lower end of the front wheel to the lower end of the front cover member. In a vehicle front view, each of an upper edge of the right light and an upper edge of the left light tilts down from an outer lateral end of the upper edge toward the middle of the vehicle in the vehicle width direction. The front cover member includes a first front cover and a second front cover formed separately from the first front cover. The first front cover is at least partially located over the right light and the left light. The second front cover is at least partially located under the right light and the left light. A dimension of the first front cover in a vehicle up-and-down direction is greater than a dimension of the second front cover in the vehicle up-and-down direction. The side cover member is attached to the second front cover. The second front cover includes an intermediate portion in the middle of the vehicle in the vehicle width direction, and the intermediate portion extends more upward than an inner lateral end of a lower edge of the right light and an inner lateral end of a lower edge of the left light.

In the saddle-ride type vehicle according to the present aspect, the dimension of the first front cover in the vehicle up-and-down direction is greater than the dimension of the second front cover in the vehicle up-and-down direction. Thus, a large space can be reliably produced after detachment of the first front cover.

Further in the vehicle front view, each of the upper edges of the right and left lights tilt down from the outer lateral end of the upper edge toward the middle of the vehicle in the vehicle width direction. Thus, the middle portion of the front cover member in the vehicle width direction can be reliably produced so as to have a large dimension in the up-and-down direction. With such preferred layouts of the right and left lights, the first front cover can be produced so as to have a large dimension in the vehicle up-and-down direction. Especially, the head pipe is located rearward of the middle portion of the front cover member in the vehicle width direction. Thus, while the front cover member is attached to the vehicle, a limited space is available for accessing to components disposed in the surrounding of the front cover member. By contrast, in the saddle-ride type vehicle according to the present aspect, a large space can be reliably produced by detachment of the first front cover.

Further, the intermediate portion of the second front cover is disposed between the right light and the left light, and extends more upward than the inner lateral ends of the lower edges of the right and left lights. Hence, the second front cover can be enhanced in its stiffness in comparison with that having a flat shape without the intermediate portion. Yet further, the intermediate portion of the second front cover is located between the right light and the left light. In other words, the intermediate portion of the second front cover is located in the middle of the front cover member in the vehicle width direction. As described above, in the middle portion of the front cover member, the first front cover is enabled to have a large up-and-down dimension by the preferred layouts of the right and left lights. Therefore, it is possible to provide the intermediate portion for inhibiting degradation in stiffness of the second front cover and to reliably produce a large space after detachment of the first front cover.

Preferably, the intermediate portion includes a recess extending rearward. In the structure, the second front cover can be further enhanced in its stiffness. Further, even with the recess extending rearward, a large space can be reliably produced by detachment of the first front cover.

Preferably, the intermediate portion includes a front surface tilting obliquely upward to front in a vehicle side view. In the structure, it is possible to compactly form a lower region of the intermediate portion in the back-and-forth direction and to enlarge the space located over the intermediate portion.

Preferably, the second front cover includes a right lateral portion located rightward of the right light and a left lateral portion located leftward of the left light. In the structure, the second front cover can be enhanced in its stiffness by the right lateral portion and the left lateral portion.

Preferably, an upper end of the intermediate portion of the second front cover is located lower than an upper end of the left lateral portion and an upper end of the right lateral portion. In the structure, a larger space can be reliably produced after detachment of the first front cover.

Preferably, each of the right lateral portion and the left lateral portion has a bent shape. In the structure, the second front cover can be further enhanced in its stiffness by the right lateral portion and the left lateral portion.

Preferably, the first front cover is a painted member, whereas the second front cover is an unpainted member. Further, the left lateral portion of the second front cover preferably protrudes more leftward than a left lateral end of the first front cover. Yet further, the right lateral portion of the second front cover preferably protrudes more rightward than a right lateral end of the first front cover. In the structure, the second front cover can be enhanced in its stiffness by the shape of the right lateral portion and that of the left lateral portion. Further, when the vehicle falls down, for instance, either the right lateral portion or the left lateral portion makes contact with the road earlier than the first front cover does. Thus, the painting of the first front cover can be protected.

Preferably, each of the right lateral portion and the left lateral portion includes a recess. In the structure, the second front cover can be further enhanced in its stiffness.

Preferably, the second front cover includes an upper portion located over the right light and the left light and a lower portion located under the right light and the left light. Further, the right lateral portion, the left lateral portion and the intermediate portion preferably respectively couple the upper portion and the lower portion. In the structure, the second front cover can be further enhanced in its stiffness.

Preferably, the upper portion of the second front cover at least partially overlaps with the first front cover in the vehicle front view. In the structure, the second front cover can be enhanced in its stiffness, and simultaneously, the front cover member can be compactly produced.

Preferably, each of the right light and the left light includes a front surface tilting obliquely upward to front in the vehicle side view. In the structure, the space located over the right light and the left light can be enlarged.

Preferably, an upper end of the first front cover is located higher than an upper end of the second front cover. In the structure, the height of the front cover member can be lowered by detaching the first front cover from the vehicle. Thus, the height of the vehicle can be lowered by detachment of the first front cover, for instance, in packing.

Preferably, the first front cover includes a windshield screen. In the structure, the windshield screen together with the first front cover can be easily replaced. Thus, the height of the first front cover, for instance, can be easily changed.

### Advantageous Effects of Invention

According to the present teaching, it is possible to maximize an advantage to be obtained by splitting a front cover member and inhibit degradation in stiffness of the front cover member in a so-called sport saddle-ride type vehicle.

### BRIEF DESCRIPTION OF THE DRAWINGS

Referring now to the attached drawings which form a portion of this original disclosure:
FIG. 1 is a side view of a saddle-ride type vehicle;
FIG. 2 is a front view of the saddle-ride type vehicle;
FIG. 3 is a plan view of the saddle-ride type vehicle;
FIG. 4 is a front view of a front fork device;
FIG. 5 is a front view of a front cover member and right and left lights;
FIG. 6 is a side view of the front cover member and the right and left lights;
FIG. 7 is an exploded perspective view of the front cover and the right and left lights;
FIG. 8 is a perspective view illustrating a condition that a headlight unit is attached to a second front cover;
FIG. 9 is a front view of the second front cover;
FIG. 10 is a partial front view of a front potion of the saddle-ride type vehicle; and
FIG. 11 is a front view of a front cover member and right and left lights according to another exemplary embodiment.

### DETAILED DESCRIPTION OF THE EMBODIMENTS

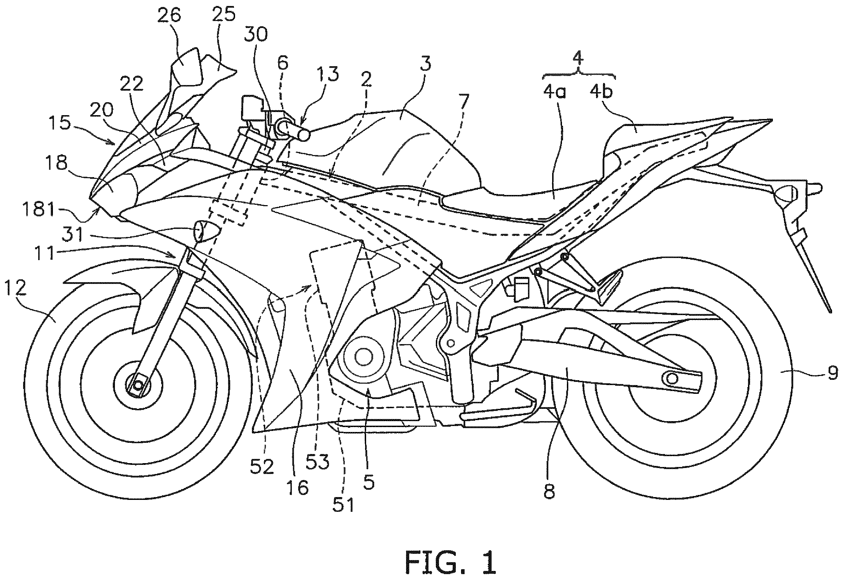

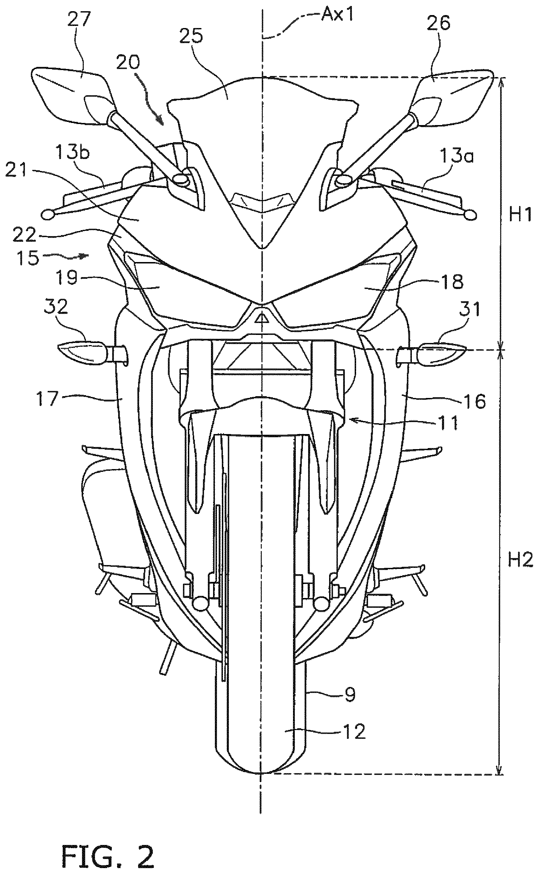

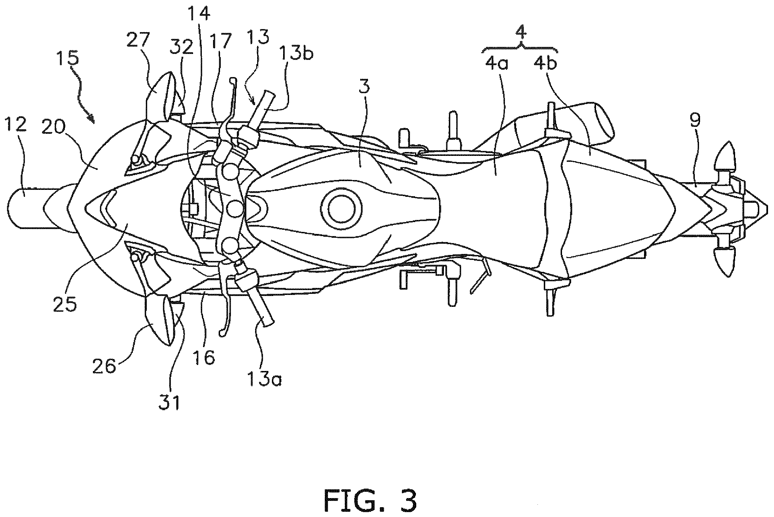

With reference to the attached drawings, explanation will be hereinafter made for a saddle-ride type vehicle 1 according to an exemplary embodiment. FIG. 1 is a side view of the saddle-ride type vehicle 1. FIG. 2 is a front view of the saddle-ride type vehicle 1. FIG. 3 is a plan view of the saddle-ride type vehicle 1. The saddle-ride type vehicle 1 is a so-called sport motorcycle. As illustrated in FIG. 1, the saddle-ride type vehicle 1 includes a frame 2, a fuel tank 3, a seat 4 and an engine 5.

The frame 2 includes a head pipe 6 and a main frame 7. The head pipe 6 is disposed in the middle of the vehicle in a vehicle width direction. The main frame 7 is disposed rearward of the head pipe 6, while being connected to the head pipe 6.

The fuel tank 3 is disposed rearward of the head pipe 6. The fuel tank 3 is disposed over the main frame 7. The seat 4 is disposed rearward of the fuel tank 3. The seat 4 is disposed over the main frame 7. The engine 5 is disposed under the fuel tank 3. The engine 5 is also supported by the main frame 7. The engine 5 includes a clank case 51 and a cylinder member 52. The cylinder member 52 includes a cylinder head 53. It should be noted that directional terms "front", "rear", "right" and "left" and their related terms refer to directions seen from a rider seated on the seat 4 in the present exemplary embodiment.

The saddle-ride type vehicle 1 includes a rear arm 8 and a rear wheel 9. The rear arm 8 is pivotably attached to the main frame 7. The rear wheel 9 is disposed rearward of the engine 5, and is supported by the main frame 7 through the rear arm 8.

The seat 4 includes a main seat 4a and a rear seat 4b. The main seat 4a is disposed rearward of the fuel tank 3. The rear seat 4b is disposed rearward of the main seat 4a. The upper surface of the rear seat 4b is located higher than that of the main seat 4a. It should be noted that the seat 4 illustrated in FIG. 1 is a separation-type seat composed of the main seat 4a and the rear seat 4b as discrete members. Alternatively, the seat 4 may be of a type that the main seat 4a and the rear seat 4b are integrated.

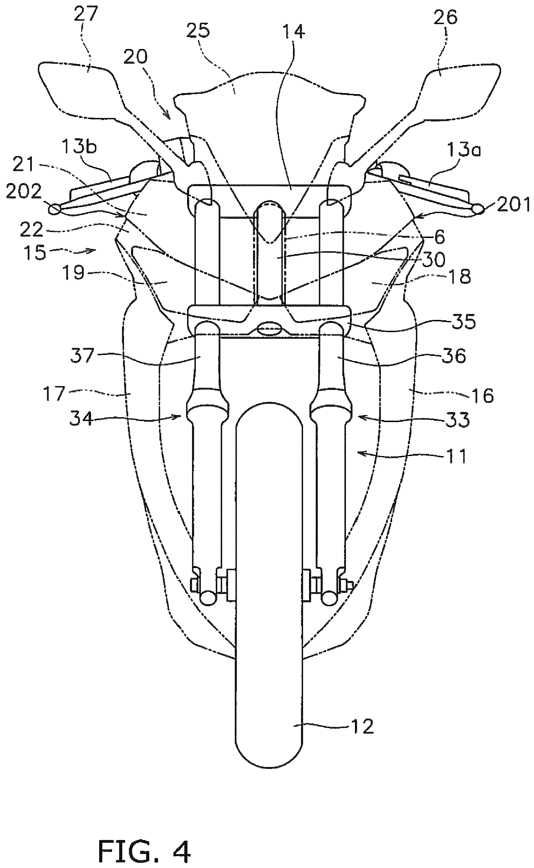

The saddle-ride type vehicle 1 includes a front fork device 11 and a front wheel 12. FIG. 4 is a front view of the front fork device 11 and the front wheel 12. As illustrated in FIG. 4, the front fork device 11 extends more downward than the head pipe 6. The front fork device 11 includes a steering shaft 30, a left shock absorber 33, a right shock absorber 34 and an under bridge 35. The steering shaft 30 is inserted through the head pipe 6 so as to be rotatable about the center axis of the head pipe 6. The left shock absorber 33 includes a left fork pipe 36. The right shock absorber 34 includes a right fork pipe 37. The under bridge 35 couple the left fork pipe 36 and the right fork pipe 37. The under bridge 35 is disposed under the head pipe 6. The front wheel 12 is rotatably supported by the lower portion of the front fork device 11. Specifically, the front wheel 12 is rotatably supported by the left shock absorber 33 and the right shock absorber 34. The engine 5 is disposed rearward of the front wheel 12.

The saddle-ride type vehicle 1 includes a handle member 13. The handle member 13 is coupled to the steering shaft 30. As illustrated in FIG. 3, the handle member 13 includes a left handle member 13a, a right handle member 13b and a top bridge 14. The left handle member 13a and the right handle member 13b are discrete members coupled to the steering shaft 30 through the top bridge 14. As illustrated in FIG. 4, the top bridge 14 is disposed over the head pipe 6. The top bridge 14 couples the steering shaft 30 and the top ends of the right and left shock absorbers 34 and 33. It should be noted that in the present exemplary embodiment, the handle member 13 is of a so-called separation type but may be of a so-called bar handle type that the right and left handle members 13b and 13a are integrated.

The saddle-ride type vehicle 1 is of a so-called full cowl type including a front cover member 15, a first side cover member 16 and a second side cover member 17. The front cover member 15 is disposed forward of the head pipe 6 and the handle member 13. The front cover member 15 is disposed forward of at least a portion of the top bridge 14. In other words, the front cover member 15 overlaps with at least a portion of the top bridge 14 in a vehicle front view. The front cover member 15 is disposed forward of at least a portion of the under bridge 35. In other words, the front cover member 15 overlaps with at least a portion of the under bridge 35 in the vehicle front view. As illustrated in FIG. 2, a dimension H1 from the lower end of the front cover member 15 to the upper end of the front cover member 15 is less than a dimension H2 from the lower end of the front wheel 12 to the lower end of the front cover member 15.

The first side cover member 16 and the second side cover member 17 are respectively attached to the front cover member 15. The first side cover member 16 and the second side cover member 17 respectively extend rearward from the front cover member 15. The first side cover member 16 and the second side cover member 17 are disposed laterally outside of the engine 5. When described in detail, the first side cover member 16 is disposed laterally leftward of the engine 5, whereas the second side cover member 17 is disposed laterally rightward of the engine 5. Further, the first side cover member 16 and the second side cover member 17 are disposed laterally outside of the front fork device 11. When described in detail, the first side cover member 16 is disposed laterally leftward of the front fork device 11, whereas the second side cover member 17 is disposed laterally rightward of the front fork device 11. A first flasher 31 is disposed in the first side cover member 16. On the other hand, a second flasher 32 is disposed in the second side cover member 17.

The lower end of the first side cover member 16 is located lower than the rotational center of the front wheel 12. The lower end of the second side cover member 17 is also located lower than the rotational center of the front wheel 12. In other words, the first side cover member 16 extends to a position lower than the rotational center of the front wheel 12. The second side cover member 17 extends to a position lower than the rotational center of the front wheel 12. Further, the lower end of the first side cover member 16 is located lower than the engine 5. The lower end of the second side cover member 17 is located lower than the engine 5.

A left light 18 and a right light 19 are disposed in the front cover member 15. The left light 18 and the right light 19 are disposed away from each other in the vehicle width direction. As illustrated in the vehicle side view of FIG. 1, a front surface 181 of the left light 18 tilts obliquely upward to the front. Likewise, the front surface of the right light 19 tilts obliquely upward to the front, although not illustrated in the drawings.

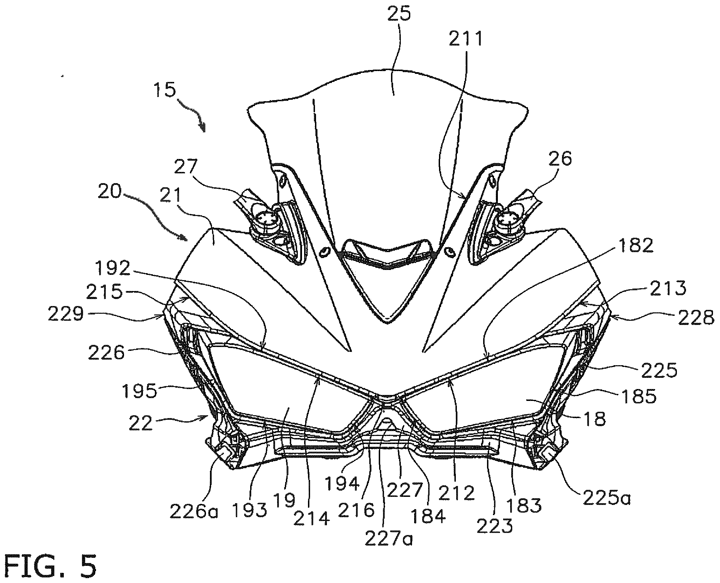

FIG. 5 is a front view of the front cover member 15, the left light 18 and the right light 19. As illustrated in the vehicle front view of FIG. 5, an upper edge 182 of the left light 18 tilts down from the outer lateral end of the upper edge 182 toward the middle of the vehicle in the vehicle width direction. In the vehicle front view, a lower edge 183 of the left light 18 tilts down from the outer lateral end of the lower edge 183 toward the middle of the vehicle in the vehicle width direction. In the vehicle front view, an upper edge 192 of the right light 19 tilts down from the outer lateral end of the upper edge 192 toward the middle of the vehicle in the vehicle width direction. In the vehicle front view, a lower edge 193 of the right light 19 also tilts down from the outer lateral end of the lower edge 193 toward the middle of the vehicle in the vehicle width direction.

It should be noted that in the present exemplary embodiment, the term "outer lateral end" refers to a lateral end located outside in the vehicle width direction. On the other hand, the term "inner lateral end" refers to a lateral end located inside in the vehicle width direction. Further, the term "inward" in the vehicle width direction refers to a direction oriented toward a center line Ax1 (see FIG. 2). The center line Ax1 is a line that extends in the up-and-down direction and passes through the center of the vehicle in the vehicle width direction. On the other hand, the term "outward" in the vehicle width direction refers to a direction oriented oppositely to a direction indicated by the term "inward" in the vehicle width direction. In other words, the term "outward" in the vehicle width direction refers to a direction oriented oppositely to the center line Ax1 that extends in the up-and-down direction and passes through the center of the vehicle in the vehicle width direction.

An inner lateral edge 184 of the left light 18 and an inner lateral edge 194 of the right light 19 tilt up toward the center of the front cover member 15 in the vehicle width direction. In other words, the inner lateral edge 184 of the left light 18 and the inner lateral edge 194 of the right light 19 tilt to each other such that the distance between the inner lateral edge 184 of the left light 18 and the inner lateral edge 194 of the right light 19 is reduced to the upward. An outer lateral edge 185 of the left light 18 and an outer lateral edge 195 of the right light 19 tilt down toward the center of the front cover member 15 in the vehicle width direction.

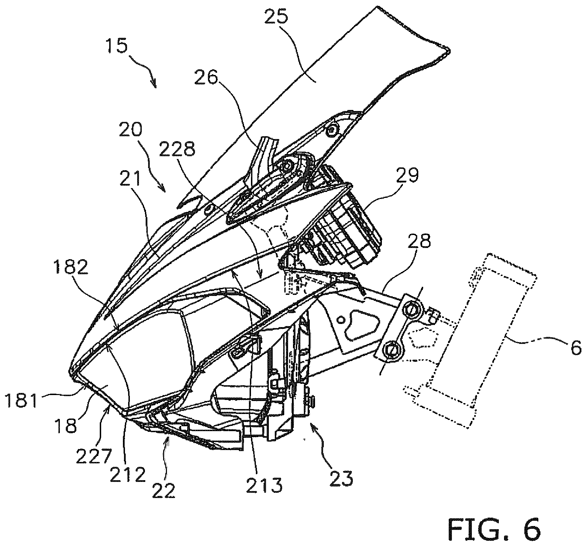

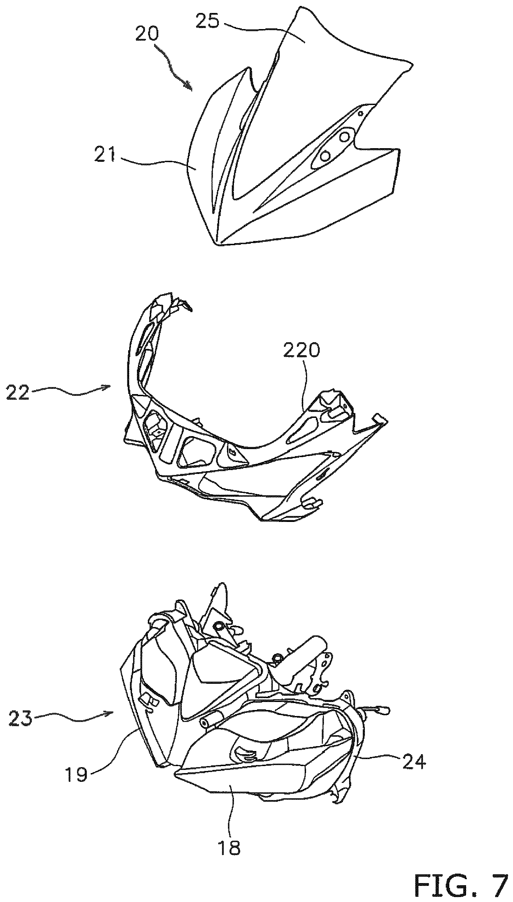

FIG. 6 is a side view of the front cover member 15. FIG. 7 is an exploded perspective view of the front cover member 15. As illustrated in FIGS. 5 to 7, the front cover member 15 includes a first front cover 20 and a second front cover 22. The second front cover 22 is a discrete member provided separately from the first front cover 20.

It should be noted that as illustrated in FIG. 7, the saddle-ride type vehicle 1 includes a headlight unit 23. The headlight unit 23 includes the aforementioned left light 18 and right light 19. The left light 18 and the right light 19 are coupled to each other through a light body 24.

The first front cover 20 is located over the left light 18 and the right light 19. As illustrated in the vehicle front view of FIG. 4, the left lateral end 201 and the right lateral end 202 of the first front cover 20 are located outward of the top bridge 14 in the vehicle width direction. The left lateral end 201 and the right lateral end 202 of the first front cover 20 are located outward of the left light 18 and the right light 19 in the vehicle width direction. The first front cover 20 is disposed forward of at least a portion of the top bridge 14. In other words, the first front cover 20 overlaps with at least a portion of the top bridge 14 in the vehicle front view.

As illustrated in FIG. 7, the first front cover 20 includes a cover portion 21 and a windshield screen 25. A left back mirror 26 and a right back mirror 27 are attached to the cover portion 21. The cover portion 21 is formed by an opaque member, The cover portion 21 is a painted component. It should be noted that the cover portion 21 may be entirely formed by an opaque member. Alternatively, the cover portion 21 may partially include a transparent member.

As illustrated in FIG. 5, the cover portion 21 includes a recess 211 on the upper edge thereof. The recess 211 recesses downward. The windshield screen 25 is attached to the cover portion 21 so as to be fitted into the recess 211. The lower edge of the cover portion 21, i.e., the lower edge of the first front cover 20 includes a first tilt edge portion 212 and a second tilt edge portion 213.

The first tilt edge portion 212 is located leftward of the center of the first front cover 20 in the vehicle width direction (hereinafter simply referred to as "a center"). The first tilt edge portion 212 is disposed roughly along the upper edge 182 of the left light 18. The first tilt edge portion 212 tilts down toward the center of the first front cover 20 in the vehicle front view.

The second tilt edge portion 213 continues to the first tilt edge portion 212. In the vehicle front view, the second tilt edge portion 213 is located laterally outward of the first tilt edge portion 212. The second tilt edge portion 213 tilts down toward the center of the first front cover 20 in the vehicle front view. The slope angle of the second tilt edge portion 213 with respect to the vehicle width direction is greater than that of the first tilt edge portion 212 with respect to the vehicle width direction.

The lower edge of the first front cover 20 includes a third tilt edge portion 214 and a fourth tilt edge portion 215. The third tilt edge portion 214 has a shape bilaterally symmetric to the first tilt edge portion 212. The third tilt edge portion 214 is located rightward of the center of the first front cover 20. The third tilt edge portion 214 is disposed roughly along the upper edge 192 of the right light 19. The third tilt edge portion 214 tilts down toward the center in the vehicle front view.

The fourth tilt edge portion 215 has a shape bilaterally symmetric to the second tilt edge portion 213. The fourth tilt edge portion 215 continues to the third tilt edge portion 214. The fourth tilt edge portion 215 is located laterally outward of the third tilt edge portion 214 in the vehicle front view. The fourth tilt edge portion 215 tilts down toward the center of the first front cover 20 in the vehicle front view. The slope angle of the fourth tilt edge portion 215 with respect to the vehicle width direction is greater than that of the third tilt edge portion 214 with respect to the vehicle width direction.

The lower edge of the first front cover 20 has a shape tapering downward. A center portion 216 of the lower edge of the first front cover 20 in the vehicle width direction has a convex shape bending downward in the vehicle front view. The center portion 216 is located lowest among the portions composing the first front cover 20 in the vehicle front view. The center portion 216 is located between the inner lateral end of the upper edge 182 of the left light 18 and the inner lateral end of the upper edge 192 of the right light 19 in the vehicle front view. The center portion 216 is located lower than the inner lateral end of the upper edge 182 of the left light 18 and the inner lateral end of the upper edge 192 of the right light 19 in the vehicle front view.

The second front cover 22 is an unpainted component. The second front cover 22 is disposed forward of at least a portion of the under bridge 35. In other words, as illustrated in the vehicle front view of FIG. 4, the second front cover 22 overlaps with at least a portion of the under bridge 35. The first side cover member 16 and the second side cover member 17 are attached to the second front cover 22. The left light 18 and the right light 19 are attached to the second front cover 22.

When described in detail, the headlight unit 23 is attached to the second front cover 22. In other words, the second front cover 22 supports the headlight unit 23. As illustrated in FIG. 7, the second front cover 22 includes an upper opening 220. In the vehicle front view, the upper opening 220 has a shape downwardly recessing from the upper edge of the second front cover 22. While being attached to the second front cover 22, the first front cover 20 covers the upper opening 220 of the second front cover 22 from the front side.

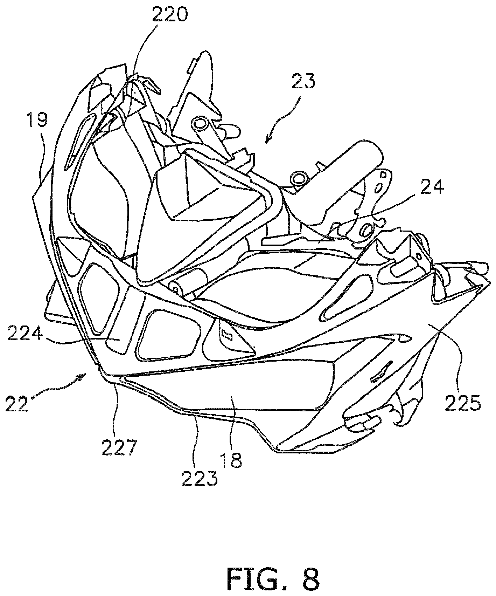

FIG. 8 is a perspective view illustrating a condition that the headlight unit 23 is attached to the second front cover 22. As illustrated in FIG. 8, the headlight unit 23 is partially exposed through the upper opening 220 of the second front cover 22, while the first front cover 20 is detached from the second front cover 22.

As illustrated in FIG. 6, the second front cover 22 is supported by the head pipe 6 through a bracket 28. A speed meter 29 is attached to the bracket 28. The speed meter 29 is disposed rearward of the first front cover 20.

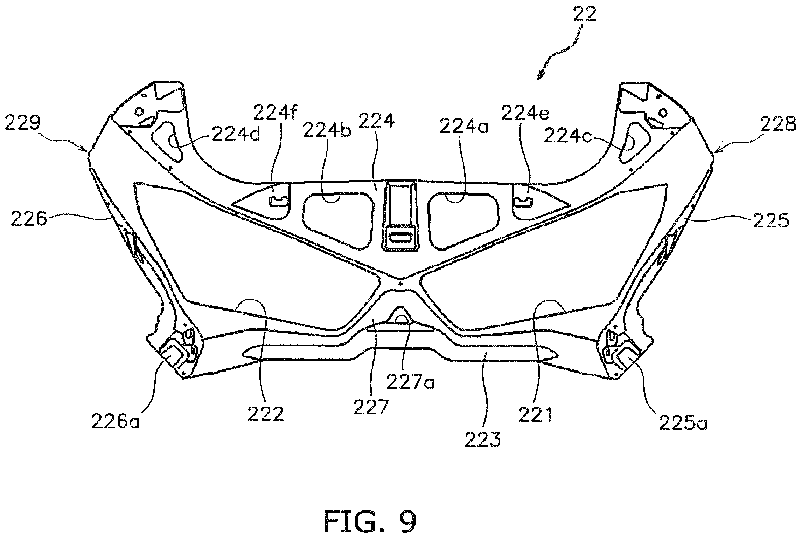

The second front cover 22 has a shape covering the surrounding of the left light 18 and that of the right light 19. FIG. 9 is a front view of the second front cover 22. The second front cover 22 includes a first opening 221 and a second opening 222. The left light 18 is attached to the second front cover 22 so as to be exposed to the outside through the first opening 221. The right light 19 is attached to the second front cover 22 so as to be exposed to the outside through the second opening 222.

When described in detail, the second front cover 22 includes a lower portion 223, an upper portion 224, a left lateral portion 225, a right lateral portion 226 and an intermediate portion 227. The lower portion 223 is located under the left light 18 and the right light 19. The upper portion 224 is located over the left light 18 and the right light 19. The upper portion 224 includes a plurality of openings 224a, 224b, 224c and 224d. Further, the upper portion 224 includes a plurality of recesses 224e and 224f.

As illustrated in FIG. 5, the left lateral portion 225 is located leftward of the left light 18. The right lateral portion 226 is located rightward of the right light 19. The left lateral portion 225 and the right lateral portion 226 couple the lower portion 223 and the upper portion 224. Each of the left lateral portion 225 and the right lateral portion 226 has a convex shape bending laterally outward. When described in detail, the left lateral portion 225 includes a left shoulder portion 228 bending laterally leftward in a convex shape. The right lateral portion 226 includes a right shoulder portion 229 bending laterally rightward in a convex shape. The left shoulder portion 228 protrudes more leftward than the left lateral end of the first front cover 20. The right shoulder portion 229 protrudes more rightward than the right lateral end of the first front cover 20.

The left lateral portion 225 includes a left recess 225a. The right lateral portion 226 includes a right recess 226a. The first side cover member 16 is attached to the left lateral portion 225. The first side cover member 16 is attached to a region of the left lateral portion 225 that is located lower than the left shoulder portion 228. The second side cover member 17 is attached to the right lateral portion 226. The second side cover member 17 is attached to a region of the right lateral portion 226 that is located lower than the right shoulder portion 229.

The intermediate portion 227 extends more upward than the inner lateral end of the lower edge 183 of the left light 18 and the inner lateral end of the lower edge 193 of the right light 19 in the middle of the vehicle in the vehicle width direction. The intermediate portion 227 connects the upper portion 224 and the lower portion 223. The intermediate portion 227 is located between the inner lateral edge 184 of the left light 18 and the inner lateral edge 194 of the right light 19. The intermediate portion 227 has a shape along the inner lateral edge 184 of the left light 18 and the inner lateral edge 194 of the right light 19. The intermediate portion 227 has an upwardly tapering shape. The upper end of the intermediate portion 227 is located lower than the upper end of the left lateral portion 225 and the upper end of the right lateral portion 226.

The intermediate portion 227 includes a recess 227a. The recess 227a has an upwardly tapering shape in the vehicle front view. When described in detail, the recess 227a has a roughly triangular shape in the vehicle front view. The recess 227a is made in the form of an aperture penetrating back and forth the intermediate portion 227. As illustrated in FIG. 6, the front surface of the intermediate portion 227 tilts obliquely upward to the front in the vehicle side view.

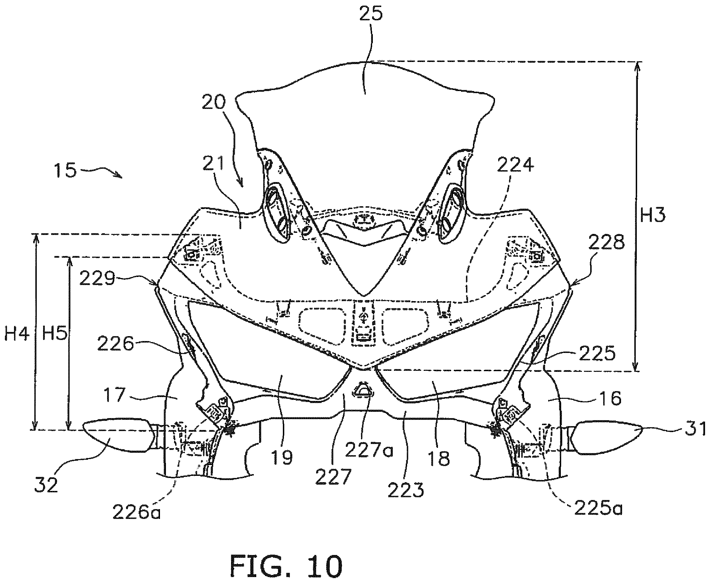

FIG. 10 is a partial front view of a front portion of the saddle-ride type vehicle 1. As illustrated in the vehicle front view of FIG. 10, the upper portion 224 of the second front cover 22 overlaps with the first front cover 20. The left lateral portion 225 of the second front cover 22 overlaps with a portion of the first side cover member 16 in the vehicle front view. The right lateral portion 226 of the second front cover 22 overlaps with a portion of the second side cover member 17 in the vehicle front view.

The left shoulder portion 228 is exposed to the outside in a position between the first front cover 20 and the first side cover member 16. The right shoulder portion 229 is exposed to the outside in a position between the first front cover 20 and the second side cover member 17. The intermediate portion 227 and the lower portion 223 are exposed to the outside.

As illustrated in the vehicle front view of FIG. 10, the dimension H3 of the first front cover 20 in the vehicle up-and-down direction is greater than the dimension H4 of the second front cover 22 in the vehicle up-and-down direction. The upper end of the first front cover 20 is located higher than the upper end of the second front cover 22. The lower end of the first front cover 20 is located lower than the upper end of the second front cover 22. The lower end of the first front cover 20 is located higher than the lower end of the second front cover 22. Further, when the appearance of the front cover member 15 is seen in the vehicle front view, the dimension H3 of the first front cover 20 in the vehicle up-and-down direction is greater than the dimension H5 of the second front cover 22 in the vehicle up-and-down direction. In other words, in the vehicle front view, the dimension H3 of the externally exposed region of the first front cover 20 in the vehicle up-and-down direction is greater than the dimension H5 of the externally exposed region of the second front cover 22 in the vehicle up-and-down direction.

The saddle-ride type vehicle 1 according to the present exemplary embodiment has the following features.

The front cover member 15 is disposed forward of the handle member 13. Thus, the compact front cover member 15 is disposed in a relatively high position. Hence, wind can be led as much as possible to the engine 5 and so forth located rearward of the front wheel 12. Further, a worker is not required to take a deeply bowing uncomfortable position in performing an attachment/detachment work of the front cover member 15. Therefore, attachment/detachment of the front cover member 15 can be easily done.

The first front cover 20 is a discrete member produced separately from the second front cover 22. Thus, it is possible to produce a large work space for components disposed in the surrounding of the front cover member 15 by detaching the first front cover 20 without entirely detaching the front cover member 15. For example, the speed meter 29 is disposed rearward of the first front cover 20. Therefore, the speed meter 29 is easily accessible from the front side of the vehicle by detachment of the first front cover 20. Further, the headlight unit 23 is partially exposed through the upper opening 220 of the second front cover 22, while the first front cover 20 is detached from the second front cover 22. Therefore, the headlight is easily accessible by detachment of the first front cover 20. Attachment/detachment of the speed meter 29 can be thereby easily done. Further or alternatively, harness layout within the front cover member 15 can be easily done. Yet further or alternatively, a maintenance work can be easily performed for the headlight unit 23. It should be noted that all the advantages effects as described above are not necessarily required to be achieved, and thus, at least one of them may be achieved.

Further, the dimension H3 of the first front cover 20 in the vehicle up-and-down direction is greater than the dimension H4 of the second front cover 22 in the vehicle up-and-down direction. Thus, a large space can be reliably produced after detachment of the first front cover 20.

In the vehicle front view, the upper edge 182 of the left light 18 tilts down from the outer lateral end thereof to the middle of the vehicle in the vehicle width direction. Further, in the vehicle front view, the upper edge 192 of the right light 19 tilts down from the outer lateral end thereof to the middle of the vehicle in the vehicle width direction. Yet further, the first front cover 20 is partially disposed between the upper edge 182 of the left light 18 and the upper edge 192 of the right light 19. Therefore, the middle portion of the first front cover 20 in the vehicle width direction is reliably enabled to have a large up-and-down dimension. Especially, the head pipe 6 is located rearward of the middle portion of the first front cover 20 in the vehicle width direction. Hence, while the front cover member 15 is attached, a limited space is available for accessing components covered with the front cover member 15. By contrast, in the saddle-ride type vehicle 1 according to the present exemplary embodiment, a large space for accessing the aforementioned components can be reliably produced by detachment of the first front cover 20.

The intermediate portion 227 of the second front cover 22 is disposed between the left light 18 and the right light 19 and extends more upward than the inner lateral end of the lower edge 183 of the left light 18 and the inner lateral end of the lower edge 193 of the right light 19. Thus, the second front cover 22 can be enhanced in its stiffness in comparison with the second front cover 22 having a flat shape without the intermediate portion 227. Further, as described above, the middle portion of the first front cover 20 in the vehicle width direction is reliably enabled to have a large up-and-down dimension due to the shape of the upper edge of the left light 18 and that of the upper edge of the right light 19. Based on the above, a large space can be reliably produced, and simultaneously, the intermediate portion 227 can be provided for inhibiting degradation in stiffness of the second front cover 22.

The intermediate portion 227 includes the recess 227a. The second front cover 22 can be thereby further enhanced in its stiffness. It should be noted that in the aforementioned exemplary embodiment, the recess 227a is made in the form of the aperture penetrating through the second front cover 22. However, the recess 227a may be closed without penetrating through the second front cover 22.

The front surface of the intermediate portion 227 tilts obliquely upward to the front in the vehicle side view. Hence, it is possible to enlarge the space located over the intermediate portion 227. Further, the upper end of the intermediate portion 227 is located lower than the upper end of the left lateral portion 225 and the upper end of the right lateral portion 226. Hence, it is possible to reliably further enlarge the space located over the intermediate portion 227.

The second front cover 22 includes the left lateral portion 225 and the right lateral portion 226. The left lateral portion 225, the right lateral portion 226 and the intermediate portion 227 respectively connect the upper portion 224 and the lower portion 223. Hence, the second front cover 22 can be further enhanced in its stiffness.

The cover portion 21 of the first front cover 20 is a painted component, whereas the second front cover 22 is an unpainted component. The left shoulder portion 228 of the second front cover 22 protrudes more leftward than the left lateral end of the first front cover 20. The right shoulder portion 229 of the second front cover 22 protrudes more rightward than the right lateral end of the first front cover 20. Thus, when the saddle-ride type vehicle 1 falls down, either the left shoulder portion 228 or the right shoulder portion 229 makes contact with the ground earlier than the first front cover 20 does. Based on the above, the second front cover 22 can be enhanced in its stiffness by the left shoulder portion 228 and the right shoulder portion 229, and further, the painting of the cover portion 21 can be protected by either the left shoulder portion 228 or the right shoulder portion 229 when the vehicle falls down.

The left lateral portion 225 includes the recess 225a, whereas the right lateral portion 226 includes the recess 226a. Therefore, the second front cover 22 can be further enhanced in its stiffness.

The front surface of the left light 18 and the front surface of the right light 19 tilt obliquely upward to the front in the vehicle side view. Therefore, the space located over the left light 18 and the right light 19 can be enlarged.

The upper end of the first front cover 20 is located higher than the upper end of the second front cover 22. Hence, the height of the front cover member 15 can be lowered by detaching the first front cover 20 from the vehicle. Consequently, the vehicle can be compactly packed by lowering the height of the vehicle through detachment of the first front cover 20.

The first front cover 20 includes the windshield screen 25. Thus, the windshield screen 25, together with the first front cover 20, can be easily replaced. Due to this, for instance, the height of the first front cover 20 can be easily changed.

One exemplary embodiment of the present teaching has been explained above.

The saddle-ride type vehicle of the present teaching is not limited to the motorcycle, and may be a vehicle equipped with three or more wheels.

The first side cover member 16 and the second side cover member 17 may have different shapes. The first side cover member 16 and the second side cover member 17 may be structured for covering not only a portion of the engine 5 but also the entirety of the engine 5 from the laterally outside. Only either of the first side cover member 16 and the second side cover member 17 may be attached to the front cover member 15. Alternatively, only either of the first side cover member 16 and the second side cover member 17 may be disposed laterally outside of at least a portion of the engine 5. Yet alternatively, either of the first side cover member 16 and the second side cover member 17 may not be provided. Each side cover member 16, 17 maybe composed of a single component, or alternatively, a plurality of components.

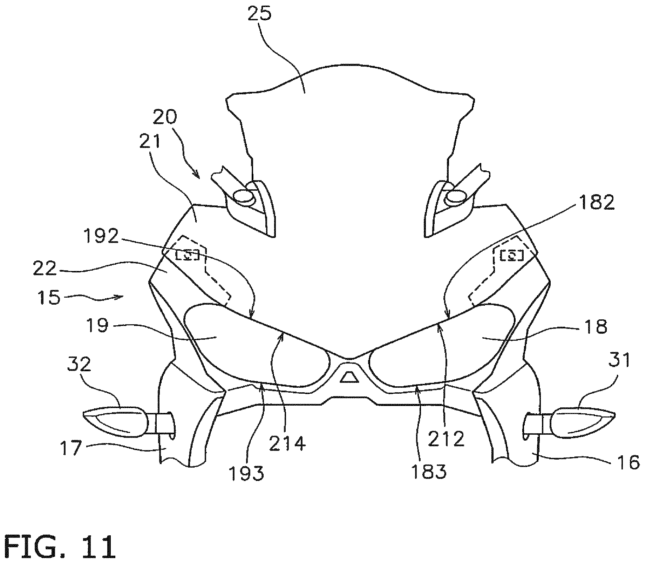

The arrangements and shapes of the first front cover 20 and the second front cover 22 may be changed without being limited to those in the aforementioned exemplary embodiment. For example, not only a portion of the first front cover 20 but also the entirety of the first front cover 20 may be located over the left light 18 and the right light 19. Not only a portion of the second front cover 22 but also the entirety of the second front cover 22 may be located under the left light 18 and the right light 19. The first front cover 20 may not include the windshield screen 25. Alternatively, as illustrated in FIG. 11, the windshield screen 25 may be formed by an opaque member similarly to the cover portion 21. At least one or all of the left lateral portion 225, the right lateral portion 226 and the upper portion 224 of the second front cover 22 may not be provided. For example, as illustrated in FIG. 11, the upper portion 224 may not be provided, and the left lateral portion 225 and the right lateral portion 226 may not be connected to each other in a position over the left light 18 and the right light 19. The first front cover 20 may be an unpainted component. The second front cover 22 may be a painted component. The recess 227a of the intermediate portion 227 may be formed so as not to penetrate back and forth the intermediate portion 227.

The left light 18 and the right light 19 may not necessarily be the headlights, and may be flashers or position lights. Alternatively, the left light 18 and the right light 19 may further include flashers and/or position lights in addition to the headlights. The headlight unit 23 may not necessarily be attached to the second front cover 22, and may be attached to the first front cover 20.

The shapes of the left light 18 and the right light 19 are not limited to those in the aforementioned exemplary embodiment. For example, the upper edge 182 of the left light 18 and the upper edge 192 of the right light 19 may not necessarily have the straight shapes, and may have curved shapes. The lower edge 183 of the left light 18 and the lower edge 193 of the right light 19 may not necessarily have the straight shapes, and may have curved shapes. Each of the upper edge 182 of the left light 18 and the upper edge 192 of the right light 19 may have an arbitrary shape as long as at least the inner lateral end thereof is located lower than the outer lateral end thereof. For example, as illustrated in the vehicle front view of FIG. 11, each of the upper edge 182 of the left light 18 and the upper edge 192 of the right light 19 may include a portion upwardly extending from the outer lateral end of the upper edge 182, 192 to the middle of the vehicle in the vehicle width direction.

A preferred embodiment discloses a saddle-ride type vehicle, comprising: a head pipe 6 being disposed in a middle of the vehicle in a vehicle width direction; a front fork device 11 including a steering shaft 30 inserted into the head pipe 6 and extending more downward than the head pipe 6; a handle member 13 being connected to the steering shaft 30; a front wheel 12 being supported by the front fork device 11; an engine 5 being disposed rearward of the front wheel 12; a front cover member 15 being disposed forward of the head pipe 6 and the handle member 13; a pair of right and left lights 19,18 being disposed in the front cover member 15; at least one side cover member 16,17 is attached to the front cover member 15, backwardly extending from the front cover member 15 and being disposed laterally outward of at least a portion of the engine 5, wherein a dimension from a lower end of the front cover member 15 to an upper end of the front cover member 15 is less than a dimension from a lower end of the front wheel 12 to the lower end of the front cover member 15, in a vehicle front view, each of an upper edge 192 of the right light 19 and an upper edge 182 of the left light 18 tilts down from an outer lateral end of the upper edge 182 toward the middle of the vehicle in the vehicle width direction, the front cover member 15 includes a first front cover 20 and a second front cover 22 formed separately from the first front cover 20, the first front cover 20 is at least partially located over the right light 19 and the left light 18, the second front cover 22 is at least partially located under the right light 19 and the left light 18, a dimension of the first front cover 20 in a vehicle up-and-down direction is greater than a dimension of the second front cover 22 in the vehicle up-and-down direction, the side cover member 16,17 is attached to the second front cover 22, and the second front cover 22 includes an intermediate portion 227 in the middle of the vehicle in the vehicle width direction, the intermediate portion 227 extending more upward than an inner lateral end of a lower edge 193 of the right light 19 and an inner lateral end of a lower edge 183 of the left light 18.

The preferred embodiment discloses the saddle-ride type vehicle as indicated above, wherein the intermediate portion 227 includes a recess 227a extending rearward.

The preferred embodiment discloses the saddle-ride type vehicle as indicated above, wherein the intermediate portion 227 includes a front surface tilting obliquely upward to front in a vehicle side view.

The preferred embodiment discloses the saddle-ride type vehicle as indicated above, wherein the second front cover 22 includes a right lateral portion 226 and a left lateral portion 225, the right lateral portion 226 being located rightward of the right light 19, the left lateral portion 225 being located leftward of the left light 18.

The preferred embodiment discloses the saddle-ride type vehicle as indicated above, wherein an upper end of the intermediate portion 227 of the second front cover 22 is located lower than an upper end of the left lateral portion 225 and an upper end of the right lateral portion 226.

The preferred embodiment discloses the saddle-ride type vehicle as indicated above, wherein each of the right lateral portion 226 and the left lateral portion 225 has a bent shape.

The preferred embodiment discloses the saddle-ride type vehicle as indicated above, wherein the first front cover 20 is a painted component, the second front cover 22 is an unpainted component, the left lateral portion 225 of the second front cover 22 protrudes more leftward than a left lateral end of the first front cover 20, and the right lateral portion 226 of the second front cover 22 protrudes more rightward than a right lateral end of the first front cover 20.

The preferred embodiment discloses the saddle-ride type vehicle as indicated above, wherein each of the right lateral portion 226 and the left lateral portion 225 includes a recess 226a,225a.

The preferred embodiment discloses the saddle-ride type vehicle as indicated above, wherein the second front cover 22 includes an upper portion 224 located over the right light 19 and the left light 18 and a lower portion 223 located under the right light 19 and the left light 18, and the right lateral portion 226, the left lateral portion 225 and the intermediate portion 227 respectively couple the upper portion 224 and the lower portion 223.

The preferred embodiment discloses the saddle-ride type vehicle as indicated above, wherein the upper portion 224 of the second front cover 22 at least partially overlaps with the first front cover 20 in the vehicle front view.

The preferred embodiment discloses the saddle-ride type vehicle as indicated above, wherein each of the right light and the left light 18 includes a front surface tilting obliquely upward to front in the vehicle side view.

The preferred embodiment discloses the saddle-ride type vehicle as indicated above, wherein an upper end of the first front cover 20 is located higher than an upper end of the second front cover 22.

The preferred embodiment discloses the saddle-ride type vehicle as indicated above, wherein the first front cover 20 includes a windshield screen 25.

The preferred embodiment discloses the saddle-ride type vehicle as indicated above, wherein a first side cover member 16 and a second side cover member 17 are respectively attached to the front cover member 15, respectively backwardly extending from the front cover member 15 and are disposed laterally outward of at least a portion of the engine 5, the first side cover member 16 and second side cover member 17 are attached to the second front cover 22.

## Claims

1. A saddle-ride type vehicle, comprising:
a head pipe (6) being disposed in a middle of the vehicle in a vehicle width direction;
a front fork device (11) including a steering shaft (30) inserted into the head pipe (6) and extending more downward than the head pipe (6);
a handle member (13) being connected to the steering shaft (30);
a front wheel (12) being supported by the front fork device (11);
an engine (5) being disposed rearward of the front wheel (12);
a front cover member (15) being disposed forward of the head pipe (6) and the handle member (13);
a pair of right and left lights (19,18) being disposed in the front cover member (15);
a head light unit (23) that includes the left light (18) the right light (19),
at least one side cover member (16,17) is attached to the front cover member (15), backwardly extending from the front cover member (15) and being disposed laterally outward of at least a portion of the engine (5),
wherein a dimension from a lower end of the front cover member (15) to an upper end of the front cover member (15) is less than a dimension from a lower end of the front wheel (12) to the lower end of the front cover member (15),
in a vehicle front view, each of an upper edge (192) of the right light (19) and an upper edge (182) of the left light (18) tilts down from an outer lateral end of the upper edge (182) toward the middle of the vehicle in the vehicle width direction,
the front cover member (15) includes a first front cover (20) and a second front cover (22) formed separately from the first front cover (20),
the first front cover (20) is at least partially located over the right light (19) and the left light (18),
the second front cover (22) is at least partially located under the right light (19) and the left light (18),
a dimension of the first front cover (20) in a vehicle up-and-down direction is greater than a dimension of the second front cover (22) in the vehicle up-and-down direction, the second front cover (22) includes an intermediate portion (227) in the middle of the vehicle in the vehicle width direction, the intermediate portion (227) extending more upward than an inner lateral end of a lower edge (193) of the right light (19) and an inner lateral end of a lower edge (183) of the left light (18),
the second front cover (22) includes an upper opening (220), the headlight unit (23) is partially exposed through the upper opening (220) of the second front cover (22), while the first front cover (20) is detached from the second front cover (22), wherein an upper end of the intermediate portion (227) of the second front cover (22) is located lower than an upper end of the head light unit (23), and
a middle portion of the first front cover (20) in the vehicle width direction is located lower than an upper end of the head light unit (23).

2. A saddle-ride type vehicle according to claim 1, wherein the second front cover (22) includes a right lateral portion (226) and a left lateral portion (225), the right lateral portion (226) being located rightward of the right light (19), the left lateral portion (225) being located leftward of the left light (18).

3. A saddle-ride type vehicle according to claim 2, wherein the second front cover (22) includes an upper portion (224) located over the right light (19) and the left light (18) and a lower portion (223) located under the right light (19) and the left light (18), and
the right lateral portion (226), the left lateral portion (225) and the intermediate portion (227) respectively couple the upper portion (224) and the lower portion (223).

4. A saddle-ride type vehicle according to claim 3, wherein the upper portion (224) of the second front cover (22) at least partially overlaps with the first front cover (20) in the vehicle front view.

5. A saddle-ride type vehicle according to any of claim 2 to 4, wherein an upper end of the intermediate portion (227) of the second front cover (22) is located lower than an upper end of the left lateral portion (225) and an upper end of the right lateral portion (226).

6. A saddle-ride type vehicle according to any of claim 2 to 5, wherein each of the right lateral portion (226) and the left lateral portion (225) has a bent shape.

7. A saddle-ride type vehicle according to any of claims 2 to 6, wherein
the first front cover (20) is a painted component,
the second front cover (22) is an unpainted component,
the left lateral portion (225) of the second front cover (22) protrudes more leftward than a left lateral end of the first front cover (20), and
the right lateral portion (226) of the second front cover (22) protrudes more rightward than a right lateral end of the first front cover (20).

8. A saddle-ride type vehicle according to any of claims 2 to 7, wherein each of the right lateral portion (226) and the left lateral portion (225) includes a recess (226a,225a).

9. A saddle-ride type vehicle according to any of claims 1 to 8, wherein the intermediate portion (227) includes a recess (227a) extending rearward.

10. A saddle-ride type vehicle according to any of claims 1 to 9, wherein the intermediate portion (227) includes a front surface tilting obliquely upward to front in a vehicle side view.

11. A saddle-ride type vehicle according to any of claims 1 to 10, wherein each of the right light and the left light (18) includes a front surface tilting obliquely upward to front in the vehicle side view.

12. A saddle-ride type vehicle according to any of claims 1 to 8, wherein an upper end of the first front cover (20) is located higher than an upper end of the second front cover (22).

13. A saddle-ride type vehicle according to any of claim 1 to 9, wherein the first front cover (20) includes a cover portion (21) and a windshield screen (25),
the cover portion (21) includes a recess (211) on the upper edge thereof, and
the windshield screen is attached to the cover portion (21) so as to be fitted into the recess (211).

14. A saddle-ride type vehicle according to any of claim 1 to 13, further comprising:
a left back mirror (26) and a right back mirror (27), wherein
the left back mirror (26) and the right back mirror (27) are attached to the first front cover (20).
